Europäisches Patentamt

(19) European Patent Office

Office européen des brevets

(11) Publication number: **0 009 969**
**B1**

# (12) EUROPEAN PATENT SPECIFICATION

(45) Date of publication of patent specification: **14.04.82**

(21) Application number: **79302086.8**

(22) Date of filing: **02.10.79**

(51) Int. Cl.³: **F 25 D 17/06, B 60 P 3/20,**
**F 25 D 11/00**

(54) Drive system for the fan of a refrigeration system.

(30) Priority: **05.10.78 GB 3947178**

(43) Date of publication of application:
**16.04.80 Bulletin 80/8**

(45) Publication of the grant of the patent:
**14.04.82 Bulletin 82/15**

(84) Designated Contracting States:
**AT BE CH DE FR GB IT LU NL SE**

(56) References cited:
**DE - U1 - 7 734 518**
**US - A - 3 646 773**
**US - A - 3 977 209**

(73) Proprietor: **TRANSFRIG LIMITED**
**97 Mortimer Street**
**London W1N 8DP (GB)**

(72) Inventor: **Stuckey, Trevor Colley**
**Sleepy Hollow Hungerford Old Bursledon**
**Southampton Hampshire (GB)**

(74) Representative: **Topps, Ronald et al,**
**D. Young & Co 10 Staple Inn**
**London WC1V 7RD (GB)**

Courier Press, Leamington Spa, England.

## Drive system for the fan of a refrigeration system

This invention relates to a drive system for the fan of a refrigeration system used for refrigerating the interior of a vehicle body or container for transporting goods which have to be kept at a low temperature, a refrigeration system having a fan driven by a drive system according to the present invention, and a vehicle body or container provided with such a refrigeration system.

A refrigeration system is known in which the compressor of the system can be driven by an internal combustion engine or by an electric motor which is energized when the internal combustion engine is inoperative. In the known system there is provided a fan for moving air through or across the evaporator of the system so that cold air is circulated through the vehicle body or container. In the known system the fan is drivingly connected to the shaft of the electric motor, which shaft is driven by the drive to the compressor when the compressor is driven by the internal combustion engine and by the electric motor when energized. The drive to the compressor is disengaged when the desired temperature is reached in the vehicle body or container, either by disengaging a clutch when the drive is from the internal combustion engine or by de-energizing the electric motor when the drive is from the electric motor. Therefore the fan stops rotating whenever the drive to the compressor is cut-out. This is disadvantageous as the cold air is not then circulated in the vehicle body or container and the temperature therewithin will increase rapidly.

When de-frosting the evaporator of the system the compressor is driven and therefore the fan is driven and shutters or the like have to be provided which are closed to prevent the fan discharging air through or over the evaporator.

When such a system is used for refrigerating a vehicle body the internal combustion engine is used to drive the compressor during the period that the vehicle is operative. When the vehicle is inoperative, such as at night, the internal combustion engine is stopped and the electric motor is connected to a suitable source of electrical energy and used to drive the compressor.

When the system is provided on a container, the internal combustion engine is used to drive the compressor during transportation of the container by rail or road and the electric motor is used to drive the compressor when the container is located near to a suitable source of electrical energy, such as when the container is being conveyed by ship.

United States Patent Specification No. 3 646 773 discloses a refrigeration system in which the fan which moves air over the evaporator is driven via a belt and pulley drive transmission and an electro-magnetic clutch from an internal combustion engine which drives the compressor of the system or by an independent electric motor when a standby electric motor drives the compressor and when the electro-magnetic clutch is disengaged. In this prior system the drive to the compressor is always maintained during operation of the engine and temperature control is carried out by effecting reverse operation of the refrigeration circuit via a four-way valve. Therefore the drive to the compressor from the engine is not interrupted during normal use of the system.

The present invention provides a drive system for the fan of a refrigeration system which will enable the fan to be stopped whilst the compressor is driven by the internal combustion engine during defrosting of the evaporator thereby avoiding the need for shutters or the like and which enables the fan to be driven when the drive to the compressor is discontinued.

According to the present invention there is provided a drive system for the fan of a refrigeration system which moves air through or over the evaporator of the refrigeration system, comprising a fluid driven motor connected to be supplied with fluid under pressure from fluid pressurizing means driven by an internal combustion engine for driving the compressor of the refrigeration system, said fluid driven motor having an output shaft drivingly connected to the shaft of an electric motor drivingly connected to the fan, said electric motor being arranged to be de-energized when the fluid driven motor is operative to drive the fan and energized to drive the fan when the fluid driven motor is inoperative, and means being provided for preventing operation of the fluid driven motor when the compressor is being driven by the internal combustion engine during defrosting of the evaporator.

Preferably the fluid driven motor comprises a hydraulic motor and the fluid pressurizing means comprises a hydraulic pump driven by the internal combustion engine.

The fluid driven motor may comprise an air driven motor and the fluid pressurizing means then comprises an air compressor driven by the internal combustion engine.

According to the present invention in another aspect there is provided a refrigeration system for refrigerating the interior of a vehicle body or container for transporting goods which have to be kept at a low temperature, said refrigeration system including an internal combustion engine, a compressor for compressing refrigerant, a drive transmission between the internal combustion engine and the compressor, means for disconnecting the drive transmission from the engine, a main electric motor, a drive transmission between the main electric motor and the compressor, an evaporator for receiving refrigerant under pressure from the compressor, a fan for moving air through or over the evaporator, and a drive system for the fan, characterized in that said drive system comprises a fluid driven motor connected to be supplied with fluid under pressure from a fluid pressurizing means driven by the internal combustion engine, said fluid driven motor having an output shaft connected to the shaft of a second electric motor drivingly connected to the fan, said second electric motor being arranged to be de-energized when the fluid driven motor is operative to drive the fan and energized to drive the fan when the fluid driven motor is inoperative, and means being provided for preventing operation of the fluid driven motor when the compressor is being driven by the internal combustion engine during de-frosting of the evaporator.

An embodiment of the present invention will now be described, by way of an example, with reference to the accompanying drawings, in which:—

Figure 1 is a diagrammatic side elevation of a vehicle provided with a body refrigerated by a refrigeration system having a fan driven by a drive system according to the present invention,

Figure 2 is a diagrammatic plan view of the drive system for the compressor of the refrigeration system and showing diagrammatically the fan drive system according to the present invention,

Figure 3 is a side elevation of the fan and the drive system according to the present invention,

Figure 4 is a circuit diagram for the hydraulic fluid of the hydraulic motor.

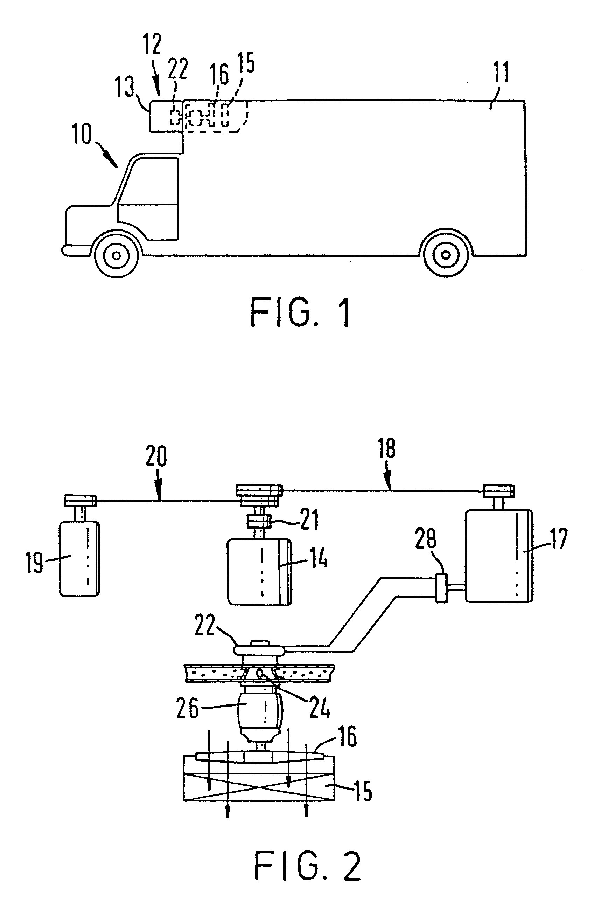

The vehicle 10 shown in Figure 1 has a body portion 11 in which goods are carried and the interior of which is refrigerated by a refrigeration system 12 provided in a portion 13, the refrigeration system 12 including a compressor 14 for compressing the refrigerant and an evaporator 15 across which air is forced by a fan 16 to circulate cold air through the body portion 11.

As shown in Figure 2, the compressor 14 is drivingly connected to an internal combustion engine 17 via a drive transmission 18 and is drivingly connected to an electric motor 19 via a drive transmission 20. The drive transmissions 18, 20 may comprise belts and pulleys or chains and gears or any other suitable drive transmitting means. The drive to the compressor 14 includes a clutch 21 or any other suitable drive disconnecting means. The compressor 14 supplies refrigerant under pressure to the evaporator 15.

During the period in which the vehicle 10 is operative the compressor 14 is driven by the internal combustion engine 17, preferably a Diesel engine, through the transmission 18 and clutch 21, the electric motor 19 being de-energized. When the interior of the body portion 11 is at the desired temperature the clutch 21 to cut out the drive to the compressor 14.

When the vehicle 10 is inoperative, such as at night, with the internal combustion engine 17 switched off, the electric motor 19 is connected to a suitable source of electric energy and energized to drive the compressor 14 through the transmission 20. Again, when the interior of the body portion 11 is at the desired temperature the clutch 21 is operated to cut out the drive to the compressor 14 or alternatively the electric motor 19 is de-energized.

The fan 16 is driven by a drive system which comprises a hydraulic motor 22 having an output shaft 23 connected by a coupling 24 to the shaft 25 of an electric motor 26 whose shaft 25 is connected to the fan 16. The hydraulic motor 22 is connected by a hydraulic circuit 27 to a pump 28 driven by the internal combustion engine 17.

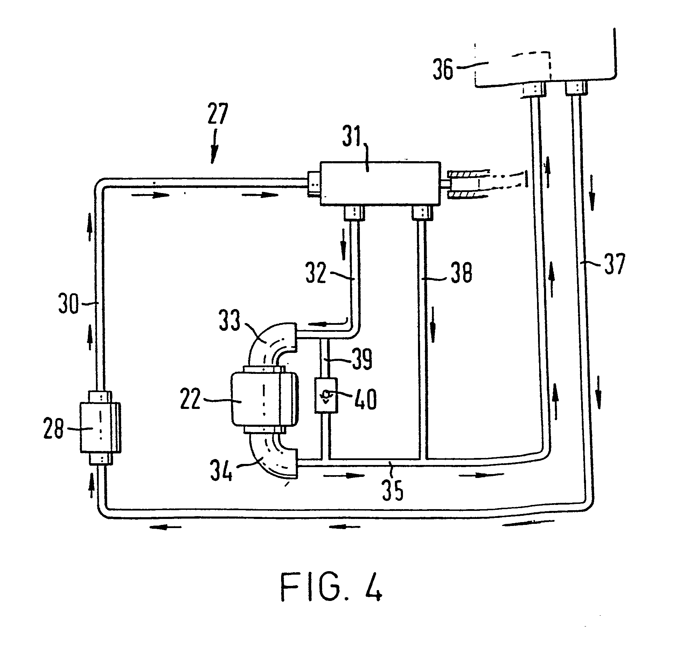

The hydraulic circuit 27 is shown in Figure 4. The high pressure side of the pump 28 is connected to a conduit 30 which at its other end is connected to an electrically operated valve 31 to which is connected a conduit 32 which is connected to the inlet 33 of the hydraulic motor 22. The outlet 34 of the hydraulic motor 22 is connected to a conduit 35 which leads to a reservoir tank 36 for hydraulic fluid and to the tank 36 is connected a conduit 37 which is connected to the low pressure side of the pump 28.

The valve 31 is connected to the conduit 35 by a conduit 38 and between the inlet 33 and the outlet 34 of the motor 22 is a conduit 39 which includes a non-return check valve 40.

When the valve 31 is de-energized it allows hydraulic fluid under pressure to flow from the pump 28 via conduits 30 and 32 to the motor 22 and the conduit 38 is closed. The hydraulic fluid under pressure drives the motor 22 which via the shafts 23, 25 and coupling 24 drives the fan 16, the electric motor 26 being de-energized. The fluid from the motor 22 then passes via outlet 34 and conduit 35 to the tank 36. The pump 28 draws fluid from the tank 36 via conduit 37. The non-return valve 40 is closed.

When the internal combustion engine 17 is inoperative the electric motor 26 is energized to drive the fan 16 and the rotor of the hydraulic motor 22 will be rotated via the shafts 25, 23 and coupling 24. The non-return valve 40 will open to allow hydraulic fluid to circulate through the hydraulic motor 22 from the outlet 34 to the inlet 33.

When the evaporator 15 needs to be defrosted the compressor 14 is driven by the internal combustion engine 17 and the solenoid-operated valve 31 is operated so that hydraulic fluid supplied by the pump 28 to conduit 30 passes directly into the circuit 38 and is returned directly to the tank 36 via conduit 35 and by-passes the hydraulic motor 22 which is therefore not driven and the fan 16 remains stationary.

Instead of having a hydraulic motor it is possible to utilize a compressed air motor supplied with air compressed by a compressor driven by the internal combustion engine.

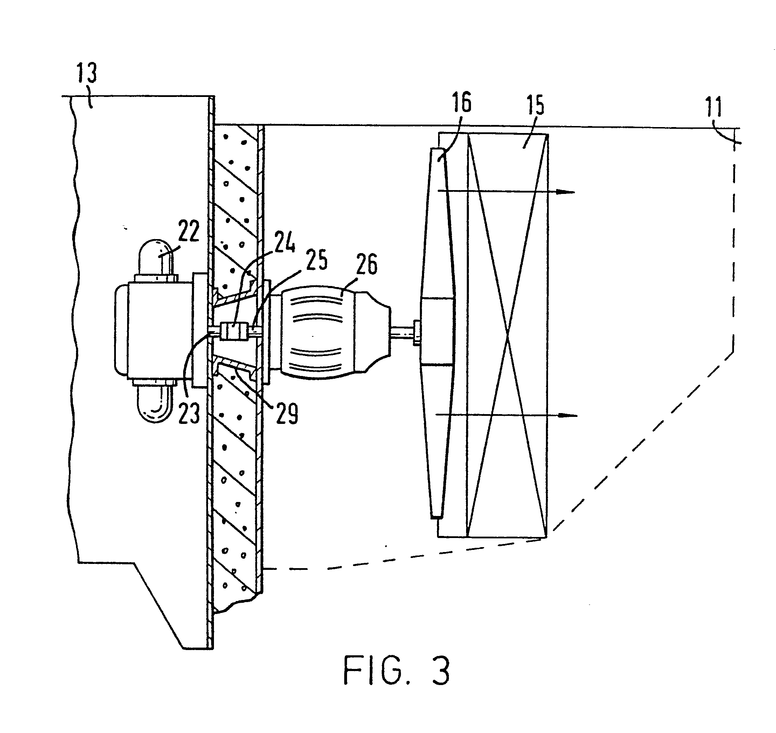

As shown in Figure 3 the shafts 23 and 25 extend through the walls of an insulated bulkhead, the walls having between them a member 29 in which the coupling 24 is housed.

The valve 31 is preferably a solenoid operated valve.

In a modified embodiment the coupling 24 is in the form of a free-wheel coupling, *i.e.* one which will transmit a drive in one direction of rotation and which will free-wheel and not transmit a drive in the opposite direction of rotation. Such a free-wheel coupling may be a jamming roller type free-wheel. With the provision of free-wheel coupling when the electric motor 26 is energized there will be no drive transmitted to the hydraulic motor 22 as the shaft 23 will not be driven and consequently there will be no need for the check value 40 in the hydraulic fluid recirculation system such as shown and described with reference to Figure 4. Such free-wheel couplings are in themselves well known and therefore not illustrated.

## Claims

1. A drive system for the fan of a refrigeration system which moves air through or over the evaporator of the refrigeration system, characterized in that it comprises a fluid driven motor (22) connected to be supplied with fluid under pressure from fluid pressurizing means (28) driven by an internal combustion engine (17) for driving the compressor (14) of the refrigeration system, said fluid driven motor (22) having an output shaft (23) drivingly connected to the shaft (25) of an electric motor (26) drivingly connected to the fan (16), said electric motor (26) being arranged to be de-energized when the fluid driven motor (22) is operative to drive the fan (16) and energized to drive the fan (16) when the fluid driven motor (22) is inoperative, and means (31) being provided for preventing operation of the fluid driven motor when the compressor is being driven by the internal combustion engine during defrosting of the evaporator.

2. A drive system as claimed in claim 1, further characterized in that the output shaft (23) of the fluid driven motor (22) is connected to the shaft (25) of the electric motor (26) by means of a free-wheel coupling (24) which will transmit driving torque from the shaft (23) of the fluid driven motor (22) to the shaft (25) of the electric motor (26) but will not transmit driving torque from the shaft (25) of the electric motor (26) to the shaft (23) of the fluid driven motor (22) when the electric motor (26) is energized.

3. A drive system as claimed in claim 1, further characterized in that the output shaft (23) of the fluid driven motor (22) is connected to the shaft (25) of the electric motor (26) by means of a drive coupling (24) which transmits driving torque in both directions of rotation, and means (40) are provided for directly interconnecting the fluid inlet and outlet of the fluid driven motor (22) when the electric motor (26) is energized.

4. A drive system as claimed in any preceding claim, further characterized in that the fluid driven motor (22) comprises a hydraulic motor and the fluid pressurizing means (28) comprises a hydraulic pump driven by the internal combustion engine (17).

5. A drive system as claimed in any of claims 1 to 3, further characterized in that the fluid driven motor (22) comprises an air motor and the fluid pressurizing means (28) comprises an air compressor driven by the internal combustion engine (17).

6. A drive system as claimed in claim 3, further characterized in that the means for directly interconnecting the fluid inlet and outlet of the fluid driven motor (22) comprises a non-return check valve (40) allowing the fluid to recirculate through the fluid motor (22) when the electric motor (26) is energized to drive the fan (16).

7. A drive system as claimed in any preceding claim, further characterized in that said means (31) for preventing operation of the fluid driven motor during defrosting comprises means (31, 38) to cause the pressurized fluid to by-pass the fluid motor (22) and prevent rotation of the fan (16) when de-frosting the evaporator (15) of the refrigeration system.

8. A drive system as claimed in claim 7, further characterized in that the by-pass means (31, 38) comprises a solenoid operated valve (31).

9. A refrigeration system for refrigerating the interior of a vehicle body or container for transporting goods which have to be kept at low temperature, the refrigeration system including an internal combustion engine (17), a compressor (14) for compressing refrigerant, a drive transmission (18) between the internal combustion engine (17) and the compressor (14), means (21) for disconnecting the drive transmission (18), a main electric motor (19), a drive transmission (20) between the main electric motor (19) and the compressor (14), an evaporator (15) for receiving refrigerant under pressure from the compressor (14), a fan (16) for moving air through or over the evaporator (15), and characterized in that a drive system for the fan (16) as claimed in any preceding claim is provided.

10. A vehicle body or container provided with a refrigeration system as claimed in claim 9.

## Revendications

1. Système de commande pour le ventilateur d'un système frigorifique qui déplace de l'air au travers ou sur la surface de l'évaporateur du système frigorifique, caractérisé en ce qu'il comprend un moteur commandé par fluide (22) connecté pour être alimenté en fluide sous pression à partir d'un moyen pressuriseur de fluide (28) commandé par un moteur à combustion interne (17) pour commander le compresseur (14) du système frigorifique, ledit moteur commandé par fluide (22) ayant un arbre de sortie (23) en connextion de commande avec l'arbre (25) d'un moteur électrique (26) en connexion de commande avec le ventilateur (16), ledit moteur électrique (26) étant agencé pour être désexcité quand le moteur commandé par fluide (22) est actif pour entraîner le ventilateur (16) et excité pour entraîner le ventilateur (16) quand le moteur commandé par fluide (22) est inactif, et un moyen (31) étant prévu pour interdire le fonctionnement du moteur commandé par fluide quand le compresseur est en cours de commande par le moteur à combustion interne pendant le dégivrage de l'évaporateur.

2. Système de commande selon la revendication 1, caractérisé en ce que l'arbre de sortie (23) du moteur commandé par fluide (22) est connecté à l'arbre (25) du moteur électrique (26) au moyen d'un accouplement à roue libre (24) de nature à transmettre un couple de commande de l'arbre (23) du moteur commandé par fluide (22) à l'arbre (25) du moteur électrique (26) mais à ne pas transmettre un couple de commande de l'arbre (25) du moteur électrique (26) à l'arbre (23) du moteur commandé par fluide (22) quand le moteur électrique (26) est excité.

3. Système de commande selon la revendication 1, caractérisé en ce que l'arbre de sortie (23) du moteur commandé par fluide (22) est connecté à l'arbre (25) du moteur électrique (26) au moyen d'un accouplement de commande (24) qui transmet le couple de commande dans les deux sens de rotation, et des moyens (40) sont prévus pour interconnecter directement l'entrée et la sortie du fluide du moteur commandé par fluide (22) quand le moteur électrique (26) est excité.

4. Système de commande selon l'une quelconque des revendications précédentes, caractérisé en ce que le moteur commandé pressuriseur de fluide (28) comprend une pompe hydraulique commandée par le moteur à combustion interne (17).

5. Système de commande selon l'une quelconque des revendication 1 à 3, caractérisé en ce que le moteur commandé par fluide (22) comprend un moteur à air comprimé et le moyen pressuriseur de fluide (28) comprend un compresseur d'air commandé par le moteur à combustion interne (17).

6. Système de commande selon la revendication 3, caractérisé en ce que le moyen pour interconnecter directement l'entrée et la sortie du moteur commandé par fluide (22) comprend une soupape de retenue (40) qui permet au fluide de recirculer à travers le moteur à fluide (22) quand le moteur électrique (26) est excité pour entraîner le ventilateur (16).

7. Système de commande selon l'une quelconque des revendications précédentes, caractérisé en ce que ledit moyen (31) pour interdire le fonctionnement du moteur commandé par fluide pendant le dégivrage comprend un moyen (31, 38) pour faire en sorte que le fluide pressurisé franchisse en dérivation le moteur à fluide (22) et interdire la rotation du ventilateur (16) lors du dégivrage de l'évaporateur (15) du système frigorifique.

8. Système de commande selon la revendication 7, caractérisé en ce que le moyen de dérivation (31, 38) comprend une électrovanne (31).

9. Système frigorifique pour réfrigérer l'intérieur d'une caisse de véhicule ou d'un container pour le transport de marchandises qui diovent être maintenues à basse température, le système frigorifique comportant un moteur à combustion interne (17), un compresseur (14) pour comprimer du réfrigérant, une transmission de commande (18) entre le moteur à combustion interne (17) et le compresseur (14), un moyen (21) pour déconnecter la transmission de commande (18), un moteur électrique principal (19), une transmission de commande (20) entre le moteur électrique principal (19) et le compresseur (14), un évaporateur (15) pour recevoir du réfrigérant sous pression du compresseur (14), un ventilateur (16) pour déplacer de l'air au travers ou sur la surface de l'évaporateur (15), et caractérisé en ce qu'un système de commande pour le ventilateur (16) tel que décrit dans l'une quelconque des revendications précédentes est prévu.

10. Caisse de véhicule ou container pourvu d'un système frigorifique selon la revendication 9.

**Patentansprüche**

1. Antrieb für den Ventilator eines Kühlsystems, der Luft durch oder über den Verdampfer des Kühlsystems bewegt, dadurch gekennzeichnet, daß dieser zum Antrieb des Kompressors (14) des Kühlsystems einen Flüssigkeitsmotor (22) aufweist, der mit Druckflüssigkeit aus einer von einem Verbrennungsmotor (17) angetriebenen Druckvorrichtung (28) gespeist wird und mit einer Abtriebswelle (23) versehen ist, die mit der Welle (25) eines mit dem Ventilator (16) gekoppelten Elektromotors (26) gekoppelt ist, wobei dieser Elektromotor (26) abgeschaltet wird, wenn der Flüssigkeitsmotor (22) läuft und den Ventilator (16) antreibt, und zum Antrieb des Ventilators (16) eingeschaltet wird, wenn der Flüssigkeitsmotor (22) stillsteht, und weiters Vorrichtungen (31) aufweist, die den Betrieb des Flüssigkeitsmotors verhindern, wenn der Kompressor während des Entforstens des Verdampfers vom Verbrennungsmotor angetrieben wird.

2. Antrieb nach Anspruch 1, dadurch gekennzeichnet, daß die Abtriebswelle (23) des Flüssigkeitsmotors (22) mit der Welle (25) des Elektromotors (26) über eine Freilaufkupplung (24) verbunden ist, die das Antriebsmoment von der Welle (23) des Flüssigkeitsmotors (22) auf die Welle (25) des Elektromotors (26) überträgt, jedoch nicht das Antriebsmoment von der Welle (25) des Elektromotors (26) auf die Welle (23) des Flüssigkeitsmotors (22), wenn der Elektromotor (26) läuft.

3. Antrieb nach Anspruch 1, dadurch gekennzeichnet, daß die Abtriebswelle (23) des Flüssigkeitsmotors (22) mit der Welle (25) des Elektromotors (26) über eine Antriebskupplung (24) verbunden ist, die das Antriebsmoment in beiden Drehrichtungen überträgt, und daß eine Vorrichtung (40) vorgesehen ist, die bei laufendem Elektromotor (26) den Flüssigkeitseinlaß und -auslaß des Flüssigkeitsmotors (22) direkt verbindet.

4. Antrieb nach einem der vorhergehenden Ansprüche, dadurch gekennzeichnet, daß der Flüssigkeitsmotor (22) einen Hydraulikmotor und die Druckvorrichtung (28) eine vom Verbrennungsmotor (17) angetriebene Hydraulikpumpe aufweist.

5. Antrieb nach einem der Ansprüche 1 bis 3, dadurch gekennzeichnet, daß der Flüssigkeitsmotor (22) einen Druckluftmotor und die Druckvorrichtung (28) einen vom Verbrennungsmotor (17) angetriebenen Druckluftkompressor aufweist.

6. Antrieb nach Anspruch 3, dadurch gekennzeichnet, daß die Vorrichtung zur direkten Verbindung des Flüssigkeitseinlasses und -auslasses des Flüssigkeitsmotors (22) mit einem Einweg-Sperrventil (40) versehen ist, das ein Zurücklaufen der Flüssigkeit durch den Flüssigkeitsmotor (22) erlaubt, wenn der Elektromotor (26) zum Antrieb des Ventilators (16) läuft.

7. Antrieb nach einem der vorhergehenden Ansprüche, dadurch gekennzeichnet, daß die Vorrichtungen (31), die das Laufen des Flüssigkeitsmotors während des Entfrostens verhindern, Vorrichtungen (31, 38) aufweisen, die die Druckflüssigkeit am Flüssigkeitsmotor (22) vorbeileiten und die Drehung des Ventilators (16) während des Entfrostens des Verdampfers (15) des Kühlsystems verhindern.

8. Antrieb nach Anspruch 7, dadurch gekennzeichnet, daß die By-Pass-Vorrichtungen (31, 38) ein elektromagnetisches Ventil (31) aufweisen.

9. Kühlsystem zur Kühlung des Innern einer Fahrzeugkarosserie oder Containers für den Transport von Gütern, die auf niedriger Temperatur gehalten werden müssen, wobei das Kühlsystem einen Verbrennungsmotor (17), einen Kompressor (14) zum Komprimieren des Kühlmittels, eine Antriebsverbindung (18) zwischen dem Verbrennungsmotor (17) und dem Kompressor (14), eine Vorrichtung (21) zur Unterbrechung der Antriebsverbindung (18), einen Hauptelektromotor (19), eine Antriebsverbindung (20) zwischen dem Hauptelektromotor (19) und dem Kompressor (14), einen Verdampfer (15) zur Aufnahme des unter Druck stehenden Kühlmittels aus dem Kompressor (14), einen Ventilator (16) zur Bewegung von Luft durch oder über den Verdampfer (15) aufweist und dadurch gekennzeichnet ist, daß für den Ventilator (16) ein Antrieb nach einem der vorhergehenden Ansprüche vorgesehen ist.

10. Fahrzeugkarosserie oder Container mit einem Kühlsystem nach Anspruch 9.

0 009 969

FIG. 1

FIG. 2

FIG. 3

FIG. 4